# EUROPEAN PATENT SPECIFICATION

(11) **EP 0 932 975 B1**
(45) Date of publication and mention of the grant of the patent: **19.10.2005**
(21) Application number: 98929589.4
(22) Date of filing: 16.07.1998
(51) Int. Cl.: H04N 5/232

(54) **VIEWFINDER APERTURE CORRECTION**
SUCHERAPERTURKORREKTUR
CORRECTION D'OUVERTURE DE VISEUR

(30) Priority: 21.08.1997 EP 97202581
(43) Date of publication of application: 04.08.1999
(73) Proprietor: BTS Holding International B.V., 4827 HG Breda (NL)
(72) Inventor: VAN DEN HERIK, Florus, Bernardus, NL-5656 AA Eindhoven (NL)
(74) Representative: Rossmanith, Manfred
(86) International application number: PCT/IB1998/001076
(87) International publication number: WO 1999/011057

(56) References cited:
- DE-A1- 3 315 857
- DE-A1- 4 015 446
- US-A- 4 680 639

## Description

The invention relates to a method and a device for carrying out a viewfinder aperture correction, and to a camera having such a device.

Cameras which do not have an auto-focus feature, often use an aperture correction for the viewfinder signal in such a manner, that when the picture is correctly focused, contours appear exaggerated. This indicates a correct focusing to the cameraman. The method of US-A-3,657,559 or that described in SMPTE Journal, vol. 78, nr. 4, April 1969, pp. 249-255, could be used to obtain such an aperture correction.

Nowadays, portable cameras are sometimes held at hip-height, which means that the viewfinder is at a larger distance from the cameraman, so that he can no longer easily judge the correctness of the focusing by means of the contour-enhanced viewfinder signal.

In DE 4015446 A1 a camera is described, in which the luminance signal is modulated with a high frequency signal of e.g. 20 MHz. For this purpose the high frequency signal component of the luminance signal Y is separated by a high pass filter and modulated with the modulation signal generated by an oscillator. The oscillator is started at the beginning of each line and stopped at the end of each line. The phase shift of the oscillator signal sequentially takes values of 0°, 120° and 240° with respect to the luminance signal. A certain number of lines begin with the same phase shift of 0°, 120° and 240°, respectively. A divider determines the magnitude of the number of lines beginning with the same phase shift. The result of this arrangement is a flickering of the high frequency signal parts, i.e. a modulation of their position on the viewfinder.

It is, *inter alia,* an object of the invention to mitigate this problem. To this end, a first aspect of the invention provides a method as defined in claim 1 and a device as claimed in claim 3. A second aspect of the invention provides a camera as defined in claim 4. An advantageous embodiment is defined in dependent claim 2.

A primary aspect of the invention provides a viewfinder aperture correction in which contours in a viewfinder signal are enhanced to obtain stressed contours when said viewfinder signal is correctly focused. To accentuate their visibility, and thus to better indicate correct focusing, even when viewed from a distance of about 0.5 m, the stressed contours are modulated at the frame frequency of the viewfinder signal to accentuate their visibility.

A preferred embodiment is based on the following recognitions. The eye sensitivity for, inter alia, line flicker can advantageously be used to simplify focusing. This property of the eye is used by amplitude-modulating horizontal contours in a picture at a low frequency well visible to the eye.

These and other aspects of the invention will be apparent from and elucidated with reference to the embodiments described hereinafter.

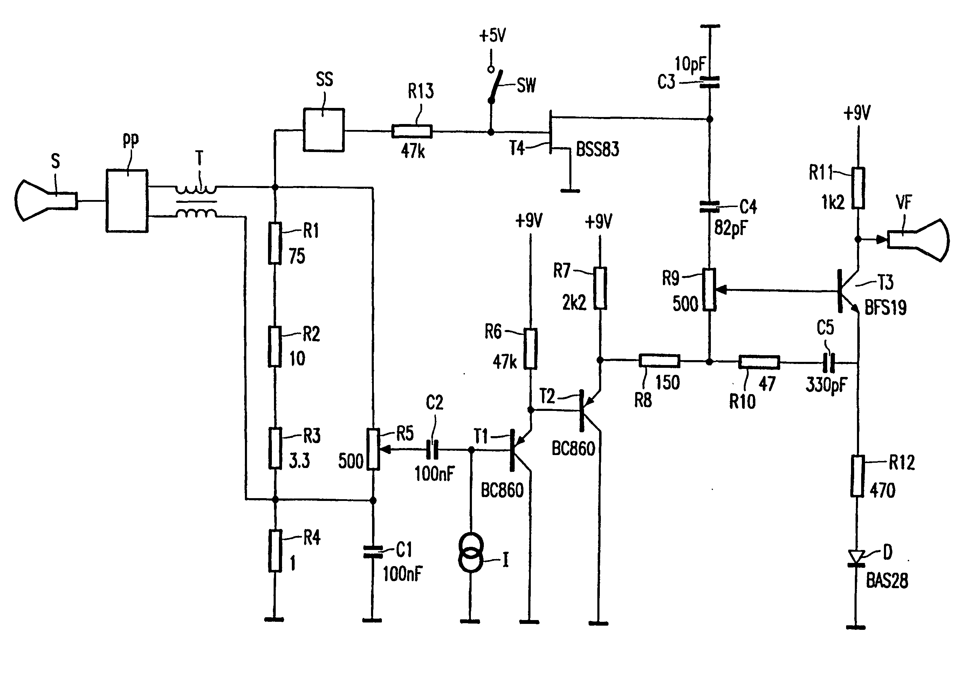

The drawing shows an embodiment of a camera having a viewfinder aperture correction in accordance with the invention.

In the drawing, a camera signal obtained by a sensor S is preprocessed by a preprocessor PP and applied to a viewfinder aperture correction device through a transformer T. A resistor chain R1-R4 is connected to the output side of the transformer T. A capacitor C1 is connected in parallel to the resistor R4. Contrast is controlled by means of a potentiometer R5 connected in parallel to the resistors R1-R3. The slider of the potentiometer R5 is connected to a base of a PNP transistor T1 through a capacitor C2. A current source I is connected between the base of the transistor T1 and ground. The emitter of the transistor T1 is connected to a base of a PNP transistor T2, and to a 9 V supply voltage through a resistor R6. The collectors of the transistors T1 and T2 are connected to ground. The emitter of the transistor T2 is connected to the 9 V supply voltage through a resistor R7, and to ground through a series connection of resistors R8, R10, a capacitor C5, a resistor R12, and a diode D. An emitter of an NPN transistor T3 is connected to a connection point of the capacitor C5 and the resistor R12. A collector of the transistor T3 is connected to the 9 V supply voltage through a resistor R11 and to a viewfinder VF. A base of the transistor T3 connected to a slider of a potentiometer R9 which provides for a crispening control. A first main terminal of the potentiometer R9 is connected to a connection point of the resistors R8, R10. A second main terminal of the potentiometer R9 is connected to ground through a series connection of capacitors C3, C4. An input of a sync separator SS is connected to an output of the transformer T.

So far the viewfinder aperture correction device corresponds to the prior art. In accordance with the present invention, a field identification output signal of the sync separator SS, which has a frequency of 25 Hz (PAL) or 30 Hz (NTSC), is applied to a gate of a transistor T4 through a resistor R13. Main terminals of the transistor T4 are connected to a connection point of the capacitors C3 and C4, and to ground, respectively. A switch S is connected between the gate of the transistor T4 and a 5V supply voltage. If the switch SW is closed, the operation of the viewfinder aperture correction device is like that of the prior art device. However, if the switch SW is open, horizontal contours in the image flash clearly visible at the frame rate when the camera has been correctly focused, thus making correct focusing far better visible than in the prior art, even at eye-hip distance when the portable camera is held at hip height.

It should be noted that the above-mentioned embodiments illustrate rather than limit the invention, and that those skilled in the art will be able to design many alternative embodiments without departing from the scope of the appended claims. Application of the invention is not limited to horizontal contours only. In the claims, any reference signs placed between parentheses shall not be construed as limiting the claim. The invention can be implemented by means of hardware comprising several distinct elements, and by means of a suitably programmed computer. In the device claim enumerating several means, several of these means can be embodied by one and the same item of hardware.

## Claims

1. A method of viewfinder aperture correction, comprising the steps of:
- providing (T) a viewfinder signal;
- stressing (R5, R9) contours in said viewfinder signal to obtain stressed contours when said viewfinder signal is correctly focused;
- modulating (SS, T4) the amplitude of said stressed contours at a frame frequency of said viewfinder signal to accentuate their visibility.

2. A method as claimed in claim 1, wherein said modulating step affects the horizontal contours.

3. A device for carrying out a viewfinder aperture correction, said device comprising:
- means (T) for providing a viewfinder signal;
- means (R5, R9) for stressing contours in said viewfinder signal to obtain stressed contours when said viewfinder signal is correctly focused;
**characterized by**
- means (SS, T4) for modulating the amplitude of said stressed contours at a frame frequency of said viewfinder signal to accentuate their visibility.

4. A camera, comprising:
- a device (T, R5, R9, SS, T4) for carrying out a viewfinder aperture correction as claimed in claim 3;
- a viewfinder (VF) for displaying said viewfinder signal with modulated stressed contours.

## Patentansprüche

1. Verfahren zur Sucheraperturkorrektur, die folgende Schritte beinhaltet:
- bereitstellen (T) eines Suchersignals;
- betonen (R5, R9) der Konturen in dem Suchersignal, um überbetonte Konturen zu erhalten, wenn das Suchersignal korrekt fokussiert ist;
- modulieren (SS, T4) der Amplitude der überbetonten Konturen mit einer Bildfrequenz des Suchersignals, um deren Sichtbarkeit zu erhöhen.

2. Verfahren nach Anspruch 1, wobei der Modulationsschritt die waagrechten Konturen beeinflusst.

3. Vorrichtung, um eine Sucheraperturkorrektur durchzuführen, wobei diese Vorrichtung umfasst:
- Mittel (T), um ein Suchersignal zu liefern;
- Mittel (R5,R9), um Konturen in dem Suchersignal zu betonen, um dann betonte Konturen zu erhaiten, sobald das Suchersignal korrekt fokussiert ist;
**gekennzeichnet durch**
- Mittel (SS, T4) zur Modulation der Amplitude der betonten Konturen mit der Bildfrequenz des Suchersignals, um deren Sichtbarkeit hervorzuheben.

4. Kamera, die aufweist:
- eine Vorrichtung (T, R5, R9, SS, T4), um eine Sucheraperturkorrektur nach Anspruch 3 auszuführen;
- einen Sucher (VF) zur Darstellung des Suchersignals mit modulierten betonten Konturen.

## Revendications

1. Procédé de correction d'ouverture de viseur comprenant les étapes consistant à :
- fournir (T) un signal de viseur ;
- accentuer (R5; R9) les contours dudit signal de viseur pour obtenir des contours accentués lorsque ledit signal de viseur est correctement focalisé ;
- moduler (SS, T4) l'ampleur desdits contours accentués à une fréquence image dudit signal pour accentuer leur visibilité.

2. Procédé tel que revendiqué dans la revendication 1, dans lequel l'étape de modulation affecte les contours horizontaux.

3. Dispositif pour procéder à une correction d'ouverture de viseur, ledit dispositif comprenant :
- des moyens (T) pour fournir un signal de viseur ;
- des moyens (R5, R9) pour accentuer les contours dudit signal de viseur pour obtenir des contours accentués lorsque ledit signal de viseur est correctement focalisé ; **caractérisé par**
- des moyens (SS, T4) pour moduler l'ampleur desdits contours accentués à une fréquence image dudit signal de viseur pour améliorer leur visibilité.

4. Caméra comprenant:
- un dispositif (T, R5, R9, SS, T4) pour procéder à une correction d'ouverture de viseur tel que revendiqué dans la revendication 3 ;
- un viseur (VF) pour afficher ledit signal de viseur avec des contours accentués modulés.
